# EUROPÄISCHE PATENTSCHRIFT

(11) **EP 1 538 367 B1**
(45) Veröffentlichungstag und Bekanntmachung des Hinweises auf die Patenterteilung: **26.07.2006**
(21) Anmeldenummer: 04400060.2
(22) Anmeldetag: 29.11.2004
(51) Int. Cl.: F16F 9/512

(54) **Dämpfventileinrichtung mit progressiver Dämpfkraftkennlinie**
Damper valve assembly with a progressive damping force characteristic
Assemblage d'un clapet amortisseur à caractéristique progressive

(30) Priorität: 01.12.2003 DE 10356639; 19.10.2004 DE 102004050732
(43) Veröffentlichungstag der Anmeldung: 08.06.2005
(73) Patentinhaber: ZF FRIEDRICHSHAFEN AG, 88046 Friedrichshafen (DE)
(72) Erfinder: Andreas Förster, 97422 Schweinfurt (DE)

(56) Entgegenhaltungen:
- WO-A-00/52354
- DE-A1- 3 107 517
- DE-A1- 3 533 386
- DE-A1- 3 602 224
- DE-A1- 10 022 029

## Beschreibung

Die Erfindung betrifft eine Dämpfventileinrichtung gemäß dem Oberbegriff von Patentanspruch 1.

Die DE 35 33 386 A1 beschreibt einen Zweirohrschwingungsdämpfer, dessen Kolben eine Druckfeder trägt, die hubabhängig einen Steuerschieber an einem Bodenventil in eine Schließstellung bewegt, um kurz vor Hubende des Kolbens eine progressive Dämpfkraftkennlinie zu erzeugen. Bei Fahrzeugen, die mit vergleichsweise hoher Geschwindigkeit über eine Schlechtwegstrecke bewegt werden, kann der Fall auftreten, dass das Rad schlagartig einfedert und mit einer maximalen Dämpfkraft, die von einem Ventilscheibensatz am Bodenventil bestimmt wird, in seiner weiteren Einfederungsbewegung gebremst wird. Trifft dann die Anschlagfeder auf den bodenventilseitigen Steuerschieber, verbleibt nur ein vergleichsweise kleiner Resthubweg, der zum Energieabbau des einfedernden Rades zur Verfügung steht. Dabei kann der Fall auftreten, dass die Fahrzeugkarosserie im Bereich der Schwingungsdämpferanbindung in Mitleidenschaft gezogen wird.

Die auf dem ersten Blick einfachste Möglichkeit besteht sicherlich darin, einfach die Fahrzeugkarosserie in dem gefährdeten Bereich zu verstärken, wobei dadurch aber ein spürbares Mehrgewicht in Kauf genommen werden müsste.

Ein weiterer Nachteil dieses Prinzips besteht darin, dass durch die kolbenseitige Anschlagfeder ein realer Hubverlust auftritt. In diesem Zusammenhang ist noch die DE 36 02 224 A1 zu erwähnen, die dasselbe Wirkprinzip beschreibt.

Die DE 31 07 517 A1 offenbart einen Schwingungsdämpfer, dessen Dämpfventileinrichtung zwei Ventile aufweist, die hydraulisch parallel geschaltet sind. Ein erstes Dämpfventil umfassend einen Drosselquerschnitt, der mit zunehmender Kolbenstangengeschwindigkeit von einem Ventilkörper, z. B. einer elastischen Scheibe, in Abhängigkeit von der Kolbenstangengeschwindigkeit verkleinert wird, so dass eine progressive Dämpfkraftkennlinie erreicht wird. Im Falle einer Überlastung kann ein Überdruckventil genutzt werden, das die beiden Arbeitsräume des Schwingungsdämpfers miteinander verbindet. In der Praxis treten bei einer Lösung nach der DE 31 07 517 A1 verschiedene Probleme auf. So ist die Dämpfkraft bei vergleichsweise niedrigen Geschwindigkeiten sehr klein und steigt parabelförmig an, so dass im Fahrbetrieb ein eher schwammiges und ungenaues Fahrgefühl bemerkbar ist. Auch bei niedrigen Geschwindigkeiten will man ein gewisses Maß an Dämpfkraft spüren, die dann in einem mittleren Kolbengeschwindigkeitsbereich einer degressiven oder linearen Dämpfkraftkennlinie folgt und erst bei besonders großen Kolbengeschwindigkeiten ein progressives Dämpfkraftverhalten an den Tag legt. Eine derartige Dämpfkraftkennlinie kann mit einem kleinen, häufig ständig geöffneten Voröffnungsquerschnitt und einem hydraulisch parallel geschalteten federkraftvorgespannten Dämpfventil erreicht werden, das ab einer definierten Kolbengeschwindigkeit öffnet.

Aufgabe der vorliegenden Erfindung, ist es eine Dämpfventileinrichtung zu realisieren, die eine Dämpfkraftkennlinie mit einem progressiv ansteigenden Anteil aufweist, aber in einem Kennliniebereich, der einem Normalbetrieb entspricht, einer fahrzeuggerechte Dämpfkraftkennlinie folgt.

Erfindungsgemäß wird die Aufgabe dadurch gelöst, dass der Steuerschieber eine vom Dämpfmedium druckbeaufschlagte Fläche aufweist, die in Abhängigkeit der Strömungsgeschwindigkeit des Dämpfmediums in Schließrichtung auf den Steuerschieber einwirkt.

Der große Vorteil der Erfindung besteht darin, dass ein konventionelles Dämpfventil als Basis verwendet werden kann, dessen Dämpfkraftkennlinie auf den Normalbetrieb abgestimmt ist und sowohl Komfort- wie auch Sicherheitsansprüchen gerecht wird. Durch den Einsatz des Steuerschiebers kann zusätzlich eine Dämpfkraftcharakteristik bei größeren Federungsgeschwindigkeiten erreicht werden, die einerseits unabhängig von der momentanen Niveaulage des Rades und unabhängig von dem Teilbereich der Dämpfkraftkennlinie des Normalbetriebs ist, so dass keinerlei Komforteinbußen zu verzeichnen sind.

Des weiteren ist vorgesehen, dass der Steuerschieber bezogen auf den Strömungsweg des Dämpfmediums in Reihe zum Dämpfventil angeordnet ist. Man verschließt den Zustrom oder den Abfluss von Dämpfmedium am Dämpfventil, um so insgesamt eine Dämpfkraftsteigerung zu erzielen.

In weiterer Ausgestaltung der Erfindung ist vorgesehen, dass der Steuerschieber mit seiner druckbeaufschlagten Fläche an eine Drosselstelle angeschlossen ist, die zur ersten Dämpfventilbaugruppe führt. Damit lässt sich eine bauraumsparende Konstruktion des gesamten Dämpfventils erreichen.

So wird die Drosselstelle von dem Außendurchmesser des Steuerschiebers bestimmt.

Um ein definiertes Betriebsverhalten des Steuerschiebers zu gewährleisten, wird der Steuerschieber von einer Feder in Durchlassstellung gehalten.

Zum Schutz der Dämpfventileinrichtung, aber auch eines Schwingungsdämpfer, in dem die Dämpfventileinrichtung verwendet wird, ist der Drosselstelle ein Druckbegrenzungsventil parallel geschaltet. Damit lässt sich die erreichbare Dämpfkraft des Dämpfventils auf definiertes Maß beschränken.

Bei einer Ausführungsvariante wird das Druckbegrenzungsventil von einem Federscheibenpaket gebildet wird, dass auch den Steuerschieber in Durchlassstellung hält. Insgesamt liegt eine sehr flachbauende Einheit vor.

Alternativ wird der Steuerschieber unabhängig von der Vorspannkraft, die auf das Druckbegrenzungsventil wirkt, in der Durchlassstellung gehalten. Diese Variante ermöglicht eine größere Gestaltungsfreiheit bei der Festlegung der Dämpfkraftkennlinie.

Dazu ist der Steuerschieber relativ zur Ventilscheibe des Druckbegrenzungsventils verschiebbar gelagert. Aus Bauraumökonomie ist die Ventilscheibe des Druckbegrenzungsventils koaxial zum Steuerschieber angeordnet.

In weiterer konstruktiver Ausgestaltung stützt sich der Steuerschieber axial in der Durchlassstellung an der Ventilscheibe des Druckbegrenzungsventils abstützt.

Um für die erste Baugruppe des Dämpfventils möglichst seriennahe Bauteile verwenden zu können, nimmt ein Federträger die den Steuerschieber in Durchlassstellung haltende Feder auf.

Insgesamt muss das Dämpfventil im Hinblick auf den angestrebten Effekt sehr präzise gefertigt sein. Damit unvermeidbare Fertigungstoleranzen die Funktion nicht beeinträchtigen, verfügt der Ventilkörper über einen plastisch verformbaren Justierbereich.

Der Justierbereich des Ventilkörpers wird von einer Wandstärkenreduzierung gebildet. Im Fertigungsablauf wird der Steuerschieber kontrolliert in die Schließstellung vorgespannt, wobei in Abhängigkeit der vorhandenen Fertigungstoleranzen eine Deformation des Steuerschiebers erfolgt und der Durchtrittsquerschnitt der Drosselstelle eingestellt wird.

Des weiteren wird die Drosselstelle von einer Innenwandung eines Zylinders eines Schwingungsdämpfers bestimmt. Diese räumliche Ausgestaltung erlaubt die Verwendung von sehr einfachen Steuerschieberbauteilen, da der Zylinder in der Regel schon als ein Präzisionsbauteil ausgeführt ist.

Gemäß einem vorteilhaften Unteranspruch ist die Dämpfventileinrichtung an einem Kolben eines Schwingungsdämpfers ausgeführt ist. Würde man das erfindungsgemäße Dämpfventil z. B. als Bodenventil bei einem Schwingungsdämpfer ausführen, dann würde lediglich das verdrängte Volumen der einfahrenden Kolbenstange zur Dämpfkrafterzeugung zur Verfügung stehen. Wenn man jedoch das erfindungsgemäß Dämpfventil an einem Kolben, z. B. für die Einschubrichtung des Kolbens ausführt, dann wird ggf. das Dämpfmediumvolumen des gesamten verdrängten Zylinderquerschnitt zur Dämpfkrafterzeugung verwendet, wobei die Kavitationsbildung in dem sich dann vergrößernden Bauraum für den sicherlich eher selten auftretenden Fall in Kauf genommen wird.

Dabei beeinflusst der Steuerschieber den Dämpfmediumzu- und Abstrom am Kolben.

Der Steuerschieber stützt sich an einer Kolbenmutter des Kolbens ab. Die gesamte Baulänge des Kolbens verlängert sich durch das erfindungsgemäße Dämpfventil nicht.

Um die Dämpfkraftkennlinie für den Normalbetrieb des Dämpfventils gezielter abstimmen zu können, ist die den Steuerschieber in Durchlassstellung haltende Feder von einer den Ventilkörper der ersten Dämpfventilbaugruppe des kolbenseitigen Dämpfventils vorspannenden Ventilfeder unabhängig ausgeführt.

Die Ventilfeder für die erste Baugruppe des Dämpfventils fixiert die den Steuerschieber umfassende Baugruppe zum Dämpfventil. Man kann den Federträger für die Feder des Steuerschiebers z. B. an der Kolbenmutter feststemmen oder schweißen. Andererseits ist die übliche Federkraft der Ventilfeder tendenziell so groß, dass diese Federkraft den Federträger auch gegen die Kraft der auf den Steuerschieber wirkenden Feder auf die Kolbenmutter vorspannen kann.

Für die Fertigung ist es vorteilhaft, insbesondere zur Einhaltung der Taktzeit, wenn möglichst weitgehend vorgefertigte Baueinheiten eingesetzt werden. Deshalb sind die Kolbenmutter der Federträger und der Steuerschieber zu einer Baueinheit verspannt.

Ergänzend kann der Baueinheit ein Tragring beigeordnet sein, auf dem sich der Steuerschieber axial abstützt. Damit wird einer Schiefstellung des Steuerschiebers in der Durchlassstellung entgegen gewirkt.

Gemäß einem vorteilhaften Unteranspruch ist der Tragring drehmomentübertragend mit der Kolbenmutter verbunden und mit Verdrehwerkzeugflächen ausgeführt ist. Die Kolbenmutter verfügt über das Befestigungsgewinde zur Kolbenstange, doch wird die Mantelfläche, an der üblicherweise das Sechskant-Profil ausgeführt ist, vom Federträger und vom Steuerschieber verdeckt. Mit der neuen Variante kann die Kolbenmutter über den Tragring aufgeschraubt werden.

Anhand der folgenden Figurenbeschreibung soll die Erfindung näher erläutert werden.

Es zeigt:
- Fig. 1: Darstellung des erfindungsgemäßen Dämpfventil als Kolben- oder Bodenventil in einem Schwingungsdämpfer
- Fig. 2: Detaildarstellung eines Druckbegrenzungsventils
- Fig. 3: Variante von einem Kolbenventil nach Fig. 1
- Fig. 4: Steuerschieber mit einem Justierbereich
- Fig. 5: Steuerschieber mit unabhängig vorgespanntem Druckbegrenzungsventil
- Fig. 6: Dämpfkraftkennlinie des erfindungsgemäßen Dämpfventils

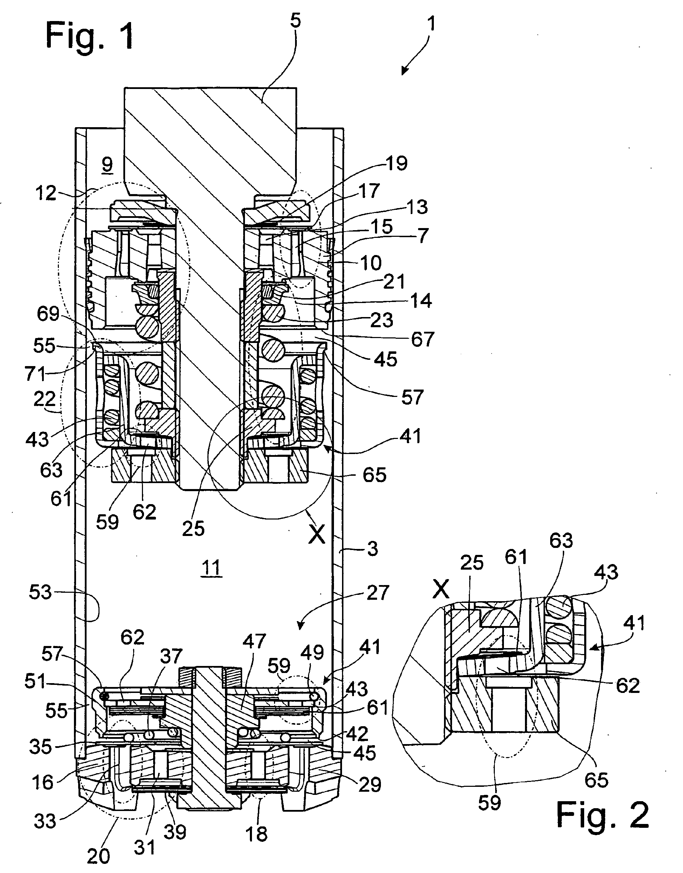

Die Figur 1 zeigt einen Ausschnitt aus einem Schwingungsdämpfer 1, in dessen mit einem Dämpfmedium gefüllten Zylinder 3 eine Kolbenstange 5, an der ein Kolben 7 befestigt ist, axial beweglich geführt ist. Der Kolben 7 unterteilt den Zylinder 3 in einen kolbenstangenseitigen und einen kolbenstangenfernen Arbeitsraum 9; 11. Im Kolben sind für beide Durchströmungsrichtungen des Dämpfmediums Gruppen von Durchtrittskanälen 13; 15 ausgeführt. Eine erste Baugruppe 10 eines Dämpfventils 12 umfasst für die Einfahrbewegung des Kolbens in den Zylinder die Durchtrittskanäle 15, deren Austrittsenden auf der Oberseite des Kolbens 7 von mindestens einer Ventilscheibe 17 in Verbindung mit einer Ventilfeder 19 zumindest teilweise abgedeckt werden. Bei einem Schwingungsdämpfer nach dem Einrohrbauprinzip würde diese erste Baugruppe - Durchtrittskanäle 15; Ventilscheibe 17 und Ventilfeder 19 - die Dämpfkraftkennlinie für den Normalbetrieb bestimmen. Innerhalb der Ventilscheibe 19 oder der Ventilsitzfläche auf der Kolbenoberseite kann ein sehr kleiner nicht dargestellter permanent geöffneter Voröffnungsquerschnitt ausgeführt sein, der nur bei kleinen Strömungs- oder Kolbengeschwindigkeiten wirksam ist. Oberhalb einer definierten Kolbengeschwindigkeit hebt die Ventilscheibe 17 von der Ventilsitzfläche ab und gibt die Durchtrittskanäle 15 frei.

Für die Dämpfung der Ausfahrrichtung stehen die auf dem kleineren Teilkreisdurchmesser ausgeführten Durchtrittskanäle 13 zur Verfügung, die von einem Ventilkörper 21, der von einer Ventilfeder 23 vorgespannt wird, ebenfalls zumindest teilweise abgedeckt werden. Die Ventilfeder 23 stützt sich an einer Kolbenmutter 25 ab, die in einem Gewindeeingriff mit einem Kolbenstangenzapfen steht. Diese beschriebenen Teile bildend die zweite Baugruppe 14 des Dämpfventils 12, wobei die Baugruppen 10; 14 des Dämpfventils 12 einem standardmäßig verwendeten Dämpfventil an einem Kolben entsprechen.

Des weiteren kann bei einem Schwingungsdämpfer nach dem Einrohrprinzip, bei einem Schwingungsdämpfer nach dem Zweirohrprinzip ist es standardmäßig vorhanden, eine Dämpfventileinrichtung in der Bauform eines Bodenventils 27 zur Anwendung kommen, dessen Ventilkörper 29 ebenfalls zwei Gruppen von Durchtrittskanälen 31; 33 aufweist. Auf einem größeren Teilkreis sind die Durchtrittskanäle 33 für den Zustrom von einem an der Unterseite des Ventilkörpers 29 nicht dargestellten dämpfmittelgefüllten Raum in den kolbenstangenfernen Arbeitsraum 11 angeordnet. Diese Durchtrittskanäle 33 werden in der Regel von einem einfachen Rückschlagventil in der Ausführung einer Scheibe 35 mit einer Schließfeder 37 abgedeckt. Die Durchtrittskanäle 33, die Scheibe 35 und die Schließfeder 37 bilden eine erste Baugruppe 16 des Bodenventils 27. Für den Abfluss aus dem kolbenstangenfernen Arbeitsraum 11 in Richtung der Unterseite des Ventilkörpers 29 verfügt der Ventilkörper 29 über die Durchtrittskanäle 31, die von mindestens einer elastischen Ventilscheibe 39 abgedeckt werden, wobei diese Kombination als die zweite Baugruppe 18 der Dämpfventileinrichtung 27 anzusehen ist. Auch diese konstruktive Ausgestaltung eines Dämpfventils ist bekannt.

Bei einer Einfahrbewegung der Kolbenstange wird das von der Kolbenstange 5 verdrängte Dämpfmediumvolumen durch die zweite Baugruppe 18 des Bodenventils 27 verdrängt und erzeugt eine Dämpfkraft. Die erste oder zweite Baugruppe 16; 18 entsprechen dem Dämpfventil 20 am Kolben , das mit steigender Strömungsgeschwindigkeit in eine Durchlassstellung übergeht.

Die als Bodenventil ausgeführte Dämpfventileinrichtung 27 verfügt zusätzlich über einen axial beweglichen Steuerschieber 41, dessen untere Stirnfläche 42 auf der Scheibe 35 des Rückschlagventils gegen eine Feder 43 in der Bauform einer elastische Scheibe zur Anlage kommen kann. Die Feder 43 hält den Steuerschieber 41 in einer Durchlassstellung, wobei die Oberseite der Scheibe 35 des Rückschlagventils und die untere Stirnfläche 42 des Steuerschiebers 41 eine erste Drosselstelle 45 bilden.

Ein ringförmiger, fest mit dem Ventilkörper 29 vernieteter Tragkörper 47 nimmt die Feder 43 am Innendurchmesser auf, wobei dieser Tragkörper 47 auch die Schließfeder 37 des Rückschlagventils abstützt. Die Feder 43 ist am Innendurchmesser mit dem Tragkörper 47 z. B. verstemmt und wird am Außendurchmesser z. B. über einen Sicherungsring 49 mit dem Steuerschieber 41 verbunden, so dass eine spielfreie Einspannung der Feder 43 vorliegt.

Der Steuerschieber 41 verfügt an seinem Außendurchmesser über eine mehrfach gestufte Kontur, wobei ein erster Absatz 51 mit der Innenwandung 53 des Zylinders eine zweite Drosselstelle 55 bildet, an der ein nennenswerter Druckabfall nutzbar ist. Die axiale Ausdehnung des ersten Absatzes ist bewusst vergleichsweise kurz gewählt, um temperaturbedingte Viskositätseinflüsse innerhalb der zweiten Drosselstelle 55 zu minimieren. Die in Richtung des kolbenstangenfernen Arbeitsraums 11 weisende Stirnfläche ist als eine druckbeaufschlagte Fläche 57 nutzbar, die auf den Steuerschieber 41 in Abhängigkeit der Strömungsgeschwindigkeit innerhalb der zweiten Drosselstelle 55 in Schließrichtung einwirkt. Die beiden Drosselstellen 45; 55 sind derart bemessen, dass sie innerhalb des Normalbetriebs des Schwingungsdämpfers keine bedeutende Auswirkungen auf die Dämpfkraftkennlinie des gesamten Dämpfventils ausüben.

Wenn die Strömungsgeschwindigkeit einen Schwellwert erreicht hat und der Steuerschieber 41 auf der Scheibe 35 des Rückschlagventils aufliegt, so dass die erste Drosselstelle 45 verschlossen ist, dann kann sich ein der ersten Drosselstelle 45 parallel geschaltetes Druckbegrenzungsventil 59 öffnen. Das Druckbegrenzungsventil 59 wird in diese Ausführungsbeispiel von einem Federscheibenpaket gebildet, nämlich der Feder 43 , die den Steuerschieber 41 in Durchlassstellung hält und mindestens einer Deckscheibe 61 unterhalb der Feder 43, wobei die Feder 43 mindestens einen Durchtrittsquerschnitt 62 aufweist, der im Normalbetrieb des Dämpfventils von der Deckscheibe 61 verschlossen wird.

Wesentlich ist, dass die Schließbewegung des Steuerschiebers 41 ausschließlich von der Strömungsgeschwindigkeit des Dämpfmedium, also von der Einfahrgeschwindigkeit des Kolbens 7 abhängig ist und damit in jeder Hublage nutzbar ist. Des weiteren wird kein Vorspannweg seitens des Kolbens 7 für die Schließbewegung des Steuerschiebers 41 am bodenseitigen Dämpfventil 27 benötigt, so dass der nutzbare Hubweg für die im Notbetrieb auftretenden Dämpfkräfte sehr groß ist.

Auch an der Kolbenstange 5 kann die erfindungsgemäße Dämpfventileinrichtung ausgeführt sein, wobei es trotzdem sehr sinnvoll ist, auch das Bodenventil mit einem Schieber 41 auszurüsten. Dabei stützt sich der Steuerschieber 41 indirekt auf der Kolbenmutter 25 ab und beeinflusst damit den Dämpfmediumzustrom in den Kolben 7. Zusätzlich trägt die Kolbenmutter einen Federträger 63 mit einem s-förmigen Querschnitt, der die Feder 43, die den Steuerschieber 41 in Durchlassrichtung vorspannt, aufnimmt. Die Feder 43 für den Steuerschieber 41 ist dabei unabhängig von der Ventilfeder 23 für den Ventilkörper 21 ausgeführt, wobei diese Ventilfeder 23 auch die den Steuerschieber 41 umfassende Baugruppe 22, nämlich den Federträger 63 zusammen mit der Feder 43 und den Steuerschieber 41 auf der Kolbenmutter 25 fixieren kann, wobei ggf. noch ein Tragring 65 zur Anwendung kommen kann.

Bei einer entsprechend großen Kolbengeschwindigkeit baut sich im kolbenstangenfernen Arbeitsraum 11 ein Druck auf, der auf die druckbeaufschlagte Fläche 57 des Steuerschiebers 41 am Kolben einwirkt und ihn gegen die Kraft der Feder 43 in Richtung einer Stirnfläche 67 des Kolben 7 bewegt. Die Oberseite des kreisringförmigen Randes 69 des Steuerschiebers 41 und die Stirnfläche 67 des Kolbens 7 bilden die erste Drosselstelle 45 und der Außendurchmesser des Randes 71 mit der Innenwandung 53 des Zylinders 3 die zweite Drosselstelle 55, wobei der Druckunterschied im Bereich der zweiten Drosselstelle 55 das Schließverhalten des Steuerschiebers 41 bestimmt.

Auch am Kolben 7 kann, wie die Fig. 2 zeigt, parallel zum Steuerschieber 41 ein Druckbegrenzungsventil 59 ausgeführt sein, das beispielsweise von einer Deckscheibe 61 gebildet wird, die den Durchtrittsquerschnitt 62 innerhalb des Federträgers 63 richtungsabhängig abdeckt.

Bei einer kombinierten Anordnung der Dämpfventileinrichtung am Kolben und am Bodenventil sollte der Schieber am Bodenventil bei einer kleineren Strömungsgeschwindigkeit die Schließstellung einnehmen als der Schieber am Kolben, da dann nicht der Effekt eintreten kann, dass bei einem geschlossenen Schieber am Kolben noch ein vergleichsweise großer Querschnitt am Bodenventil zur Verfügung steht und das Volumen aus dem kolbenstangenfernen Arbeitsraum durch das Bodenventil ausgeschoben wird. Man würde damit Dämpfkraft ungenutzt lassen.

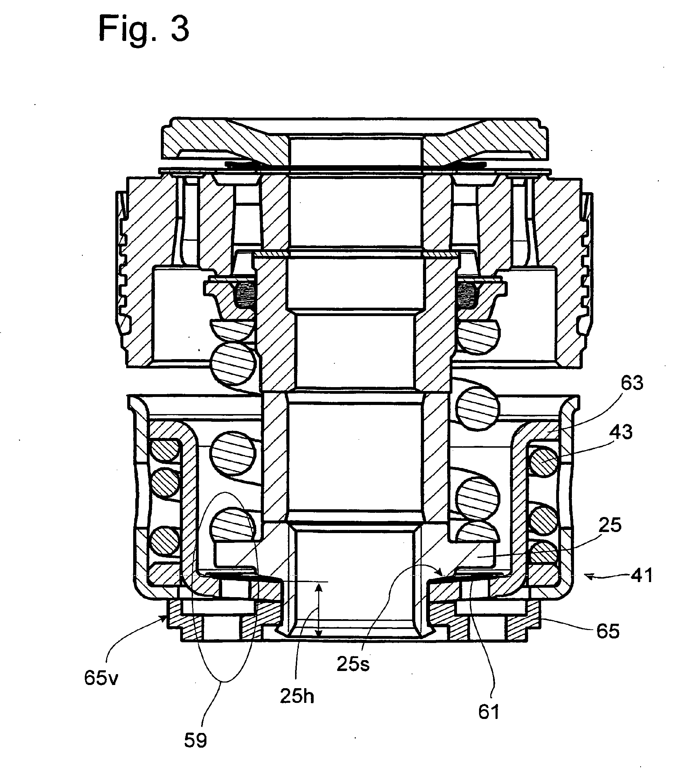

Die Fig. 3 zeigt eine Abwandlung zur Fig. 1. Der Unterschied besteht darin, dass die Kolbenmutter 25, der Federträger 63, der Steuerschieber 41 zusammen mit der Feder 43 und dem Tragring 65 eine Baueinheit bilden. Dazu verfügt die Kolbenmutter über eine Stützfläche 25s, an der die Deckscheibe 61 des Druckbegrenzungsventils 59 anliegt. Der Innendurchmesser des Tragrings 65 ist profiliert, dass bei einer plastischen Verformung eines Hülsenabschnitts 25h der Kolbenmutter 25 ein überstehendes Ende auf die Unterseite des Tragrings und in die Profilierung des Tragrings verformt wird, so dass eine drehmomentübertragende Verbindung zwischen der Kolbenmutter 25 und dem Tragring 65 besteht. Außenseitig ist der Tragring mit Verdrehwerkzeugflächen 65v versehen, die es erleichtern, die besagte Baueinheit auf den Kolbenstangenzapfen zu schrauben.

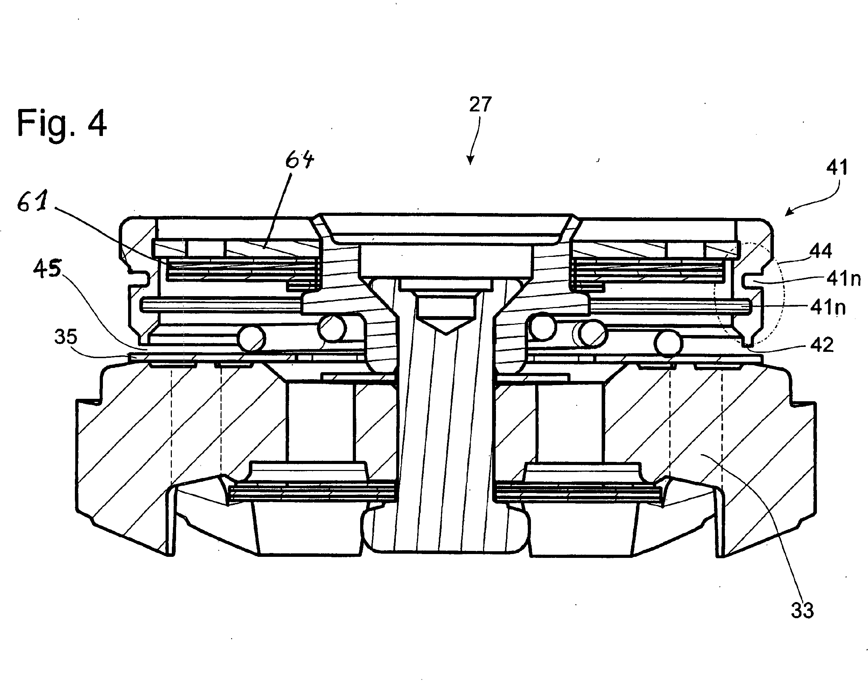

Die Fig. 4 enthält u. a. eine Abwandlung des Steuerschiebers 41 innerhalb des Bodenventils 27. Der ringförmige Steuerschieber 41 wird von einer Ventilscheibe 64 in Kombination mit den elastischen Deckscheiben 61 in einer definierten Durchlassstellung gehalten. Insbesondere Höhentoleranzen der einzelnen Bauteile können dazu führen, dass der Abstand zwischen der Stirnfläche 42 und der Scheibe 35 für die Durchtrittskanäle 33 nicht das erforderliche Maß einnimmt, wodurch die Wirkung der Drosselstelle 45 verändert wird. Um einen Fehler dieser Art zu minimieren, ist vorgesehen, dass der besagte Abstand bedingt durch die maßliche Ausgestaltung der einzelnen Bauteile stets kleiner ist als das Nennmaß für die korrekte Einstellung der Drosselstelle 45.

Innerhalb der Wand des ringförmigen Steuerschiebers 41 sind am Innen- und am Außendurchmesser mindestens eine umlaufende Nut 41 n als Wandstärkenreduzierung eingearbeitet, die einen plastisch verformbaren Justierbereich 44 bilden. Bei der Einstellung der Drosselstelle wird der Steuerschieber auf die Oberseite der Scheibe 35 gedrückt, wobei der Steuerschieber plastisch in Axialrichtung deformiert wird, bis in der Durchlassstellung das korrekte Abstandsmaß für die Drosselstelle vorliegt. Mit dieser Methode können alle das Abstandsmaß bestimmenden Fehler ausgeglichen werden.

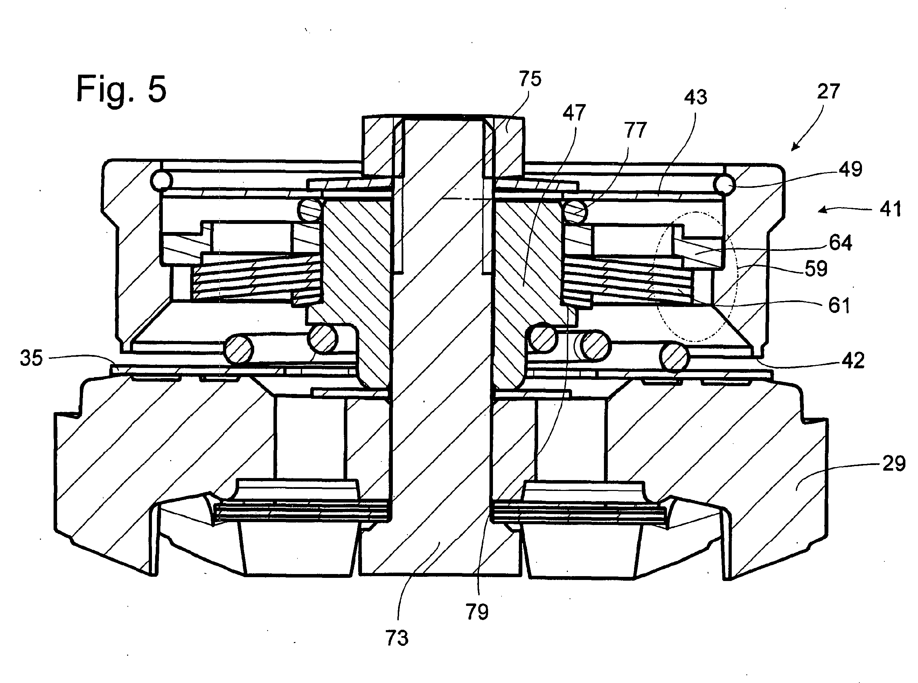

Die Fig. 5 zeigt eine Weiterentwicklung des Bodenventils 27 der Fig. 1, bei der die Vorspannung der Deckscheiben 61 des Druckbegrenzungsventils 59 unabhängig ist von der Feder 43, die den Steuerschieber 41 in der Durchlassstellung hält. Die Feder 43 ist als eine Scheibenfeder ausgeführt, deren Innendurchmesserbereich zwischen einem Bolzen 73 und einer Spannmutter 75 zum Ventilkörper 29 fixiert ist. Alternativ kann auch eine Nietverbindung gemäß Fig. 1 verwendet werden. Die Scheibenfeder 43 wirkt auf die Unterseite des Sicherungsrings 49. Der Tragkörper 47 dient als Stütze für die Deckscheiben 61, auf die eine vom Steuerschieber unabhängige Ventilscheibe 64 vorgespannt sind. Ein Druckring 77 sorgt für eine Verspannungskette von der Stützfläche 79 des Tragkörpers über die Deckscheiben 61 und die Ventilscheibe 64, dem Druckring 77 sowie der Feder 43 bis zur Spannmutter 75. Der Steuerschieber 41 stützt sich in der Durchlassstellung axial an der Unterseite der Ventilscheibe 64 ab, wobei die Vorspannkraft von der Feder 43 erzeugt wird. Insgesamt ist der Steuerschieber 41 zwischen der Blockierstellung, Stirnfläche 42 liegt auf der Scheibe 35 auf, und der Durchlassstellung, Steuerschieber liegt axial an der Unterseite der Ventilscheibe 64 an, verschiebbar zu den Deckscheiben 61 gelagert. Die Vorspannung der Deckscheiben 61 wirkt nicht auf den Steuerschieber, so dass hinsichtlich des Betriebsverhaltens des Steuerschiebers keine Abhängigkeit zur Abhubbewegung der Deckscheiben 61 von der Ventilscheibe 64 besteht.

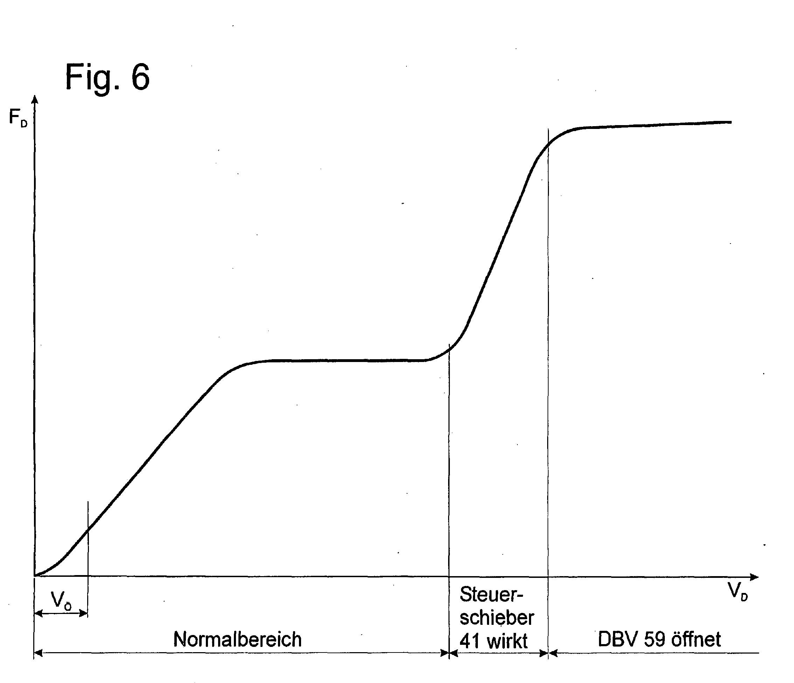

Die Fig. 6 zeigt den Dämpfkraftkennlinienverlauf Dämpfkraft = f (Strömungsgeschwindigkeit VD) des erfindungsgemäßen Dämpfventils. Bei kleinen Strömungsgeschwindigkeiten wirkt nur der bei vielen Dämpfventilkonstruktionen ständig geöffnete Voröffnungsquerschnitt, der z. B. in der Ventilsitzfläche für die Ventilscheibe 17 ausgeführt ist. Sobald die Dämpfkraft ein gewisses Niveau erreicht hat, hebt in Abhängigkeit der Bewegungsrichtung des Kolbens eine der Ventilscheiben bzw. Ventilkörper am Kolben oder am bodenseitigen Ventil 27 ab, wobei vielfach tendenziell ein linearer oder degressiver Kennlinienverlauf im Normalbereich des Schwingungsdämpfers angestrebt wird. Bei extremen Strömungsgeschwindigkeiten in den Dämpfventilen, z. B. bei einer raschen Federungsbewegung des Schwingungsdämpfers, wirkt der Steuerschieber sehr stark dämpfkraftverstärkend, wobei ab einem definierten Dämpfkraftniveau das Druckbegrenzungsventil 59 öffnet.

## Patentansprüche

1. Dämpfventileinrichtung, umfassend ein erstes Dämpfventil (15; 17; 19; 29; 33; 35; 37) mit einem Dämpfkraftkennlinienverlauf, bei dem ein Dämpfventilkörper (17) in einem ersten Betriebsbereich als Funktion der Strömungsgeschwindigkeit am Dämpfventil (15; 17; 19; 29; 33; 35; 37) mit steigender Strömungsgeschwindigkeit eines Dämpfmediums in eine Durchlassbetriebsstellung übergeht, mit einem zweiten Dämpfventil (41; 55), das in einem zweiten Betriebsbereich des Dämpfkraftkennlinienverlaufs eine progressiven Dämpfkraftcharakteristik aufweist und dessen Drosselstelle (55) in Verbindung mit einem Steuerschieber (41) in eine Schließstellung überführbar ist,
**dadurch gekennzeichnet,**
**dass** der Steuerschieber (41) eine vom Dämpfmedium druckbeaufschlagte Fläche (57) aufweist, die in Abhängigkeit der Strömungsgeschwindigkeit des Dämpfmediums in Schließrichtung auf den Steuerschieber (41) einwirkt.

2. Dämpfventileinrichtung nach Anspruch 1,
**dadurch gekennzeichnet,**
**dass** der Steuerschieber (41) bezogen auf den Strömungsweg des Dämpfmediums in Reihe zum Dämpfventil (12; 20) angeordnet ist.

3. Dämpfventileinrichtung nach Anspruch 1,
**dadurch gekennzeichnet,**
**dass** der Steuerschieber (41) mit seiner druckbeaufschlagten Fläche (57) an eine Drosselstelle (55) angeschlossen ist, die zur ersten Dämpfventilbaugruppe (15; 17; 19; 31; 39) führt.

4. Dämpfventileinrichtung nach Anspruch 3,
**dadurch gekennzeichnet,**
**dass** die Drosselstelle (55) von dem Außendurchmesser des Steuerschiebers (41) bestimmt wird.

5. Dämpfventileinrichtung nach Anspruch 1,
**dadurch gekennzeichnet,**
**dass** der Steuerschieber (41) von einer Feder (43) in Durchlassstellung gehalten wird.

6. Dämpfventileinrichtung nach Anspruch 1,
**dadurch gekennzeichnet,**
**dass** der Drosselstelle (45; 55) ein Druckbegrenzungsventil (59) parallel geschaltet ist.

7. Dämpfventileinrichtung nach Anspruch 6,
**dadurch gekennzeichnet,**
**dass** das Druckbegrenzungsventil (59) von einem Federscheibenpaket (43; 61) gebildet wird, das auch den Steuerschieber (41) in der Durchlassstellung hält.

8. Dämpfventil nach Anspruch 6,
**dadurch gekennzeichnet,**
**dass** der Steuerschieber (41) unabhängig von der Vorspannkraft, die auf das Druckbegrenzungsventil wirkt, in der Durchlassstellung gehalten wird.

9. Dämpfventil nach Anspruch 8,
**dadurch gekennzeichnet,**
**dass** der Steuerschieber (41) relativ zur Ventilscheibe (64) des Druckbegrenzungsventils (59) verschiebbar gelagert ist.

10. Dämpfventil nach Anspruch 9,
**dadurch gekennzeichnet,**
**dass** sich der Steuerschieber (41) in der Durchlassstellung axial an der Ventilscheibe (64) des Druckbegrenzungsventils (59) abstützt.

11. Dämpfventileinrichtung nach Anspruch 1,
**dadurch gekennzeichnet,**
**dass** ein Federträger (63) die den Steuerschieber (41) in Durchlassstellung haltende Feder (43) aufnimmt.

12. Dämpfventil nach Anspruch 1,
**dadurch gekennzeichnet,**
**dass** der Steuerschieber (41) über einen plastisch verformbaren Justierbereich (44) verfügt.

13. Dämpfventil nach Anspruch 12,
**dadurch gekennzeichnet,**
**dass** der Justierbereich (44) des Ventilkörpers (41) von einer Wandstärkenreduzierung (41 n) gebildet wird.

14. Schwingungsdämpfer mit einer Dämpfventileinrichtung nach Anspruch 4,
**dadurch gekennzeichnet,**
**dass** die Drosselstelle (55) von einer Innenwandung (53) eines Zylinders (3) des Schwingungsdämpfers (1) bestimmt wird.

15. Schwingungsdämpfer mit einer Dämpfventileinrichtung nach Anspruch 1,
**dadurch gekennzeichnet,**
**dass** die erfindungsgemäße Dämpfventileinrichtung an einem Kolben (7) des Schwingungsdämpfers (1) ausgeführt ist.

16. Schwingungsdämpfer mit einer Dämpfventileinrichtung nach Anspruch 5,
**dadurch gekennzeichnet,**
**dass** sich der Steuerschieber (41) an einer Kolbenmutter (25) des Kolbens (7) abstützt.

17. Schwingungsdämpfer mit einer Dämpfventileinrichtung nach Anspruch 5,
**dadurch gekennzeichnet,**
**dass** die den Steuerschieber (41) in Durchlassstellung haltende Feder (43) von einer den Ventilkörper (21) der ersten Dämpfventilbaugruppe (10) des kolbenseitigen Dämpfventils vorspannenden Ventilfeder (23) unabhängig ausgeführt ist.

18. Dämpfventileinrichtung für einen Schwingungsdämpfer nach Anspruch 7,
**dadurch gekennzeichnet,**
**dass** die Ventilfeder (23) für die erste Baugruppe (10) des Dämpfventils (12) die den Steuerschieber (41) umfassende Baugruppe (41; 43; 63) zum Dämpfventil fixiert.

19. Schwingungsdämpfer mit einem Dämpfventil nach Anspruch 6;
**dadurch gekennzeichnet,**
**dass** die Kolbenmutter (25) den Federträger (63) und den Steuerschieber (41) zu einer Baueinheit verspannt.

20. Schwingungsdämpfer mit einem Dämpfventil nach Anspruch 9,
**dadurch gekennzeichnet,**
**dass** der Baueinheit (25; 63; 41) ein Tragring (65) beigeordnet ist, auf dem sich der Steuerschieber (41) axial abstützt.

21. Schwingungsdämpfer mit einem Dämpfventil nach Anspruch 20,
**dadurch gekennzeichnet,**
**dass** der Tragring (65) drehmomentübertragend mit der Kolbenmutter (25) verbunden und mit Verdrehwerkzeugflächen (65v) ausgeführt ist.

22. Schwingungsdämpfer mit einer Dämpfventileinrichtung nach Anspruch 14,
**dadurch gekennzeichnet,**
**dass** die Dämpfventileinrichtung am Kolben (7) und am Bodenventil (27) ausgeführt ist

23. Schwingungsdämpfer mit einer Dämpfventileinrichtung nach Anspruch 22,
**dadurch gekennzeichnet,**
**dass** der Steuerschieber (41) am Bodenventil (27) bei einer geringeren Strömungsgeschwindigkeit die Schließposition einnimmt als der Steuerschieber (41) an der kolbenseitigen Dämpfventileinrichtung.

## Claims

1. Damper-valve device, comprising a first damper valve (15; 17; 19; 29; 33; 35; 37) having a damper-force characteristic curve profile, in which a damper-valve body (17), in a first operating range as a function of the flow speed at the damper valve (15; 17; 19; 29; 33; 35; 37), moves into a throughflow operating position as the flow speed of a damper medium increases, having a second damper valve (41; 55) which has a progressive damper-force characteristic in a second operating range of the damper-force characteristic curve profile and the throttle point (55) of which can be transferred into a closed position in conjunction with a control slide (41), **characterized in that** the control slide (41) has a surface (57) which is loaded with pressure by the damper medium and acts on the control slide (41) as a function of the flow speed of the damper medium in the closing direction.

2. Damper-valve device according to Claim 1, **characterized in that**, in relation to the flow path of the damper medium, the control slide (41) is arranged in series with respect to the damper valve (12; 20).

3. Damper-valve device according to Claim 1, **characterized in that** the control slide (41) is connected with its pressure-loaded surface (57) to a throttle point (55) which leads to the first damper-valve assembly (15; 17; 19; 31; 39).

4. Damper-valve device according to Claim 3, **characterized in that** the throttle point (55) is defined by the external diameter of the control slide (41).

5. Damper-valve device according to Claim 1, **characterized in that** the control slide (41) is held in the throughflow position by a spring (43).

6. Damper-valve device according to Claim 1, **characterized in that** a pressure-limiting valve (55) is connected in parallel to the throttle point (45; 55).

7. Damper-valve device according to Claim 6, **characterized in that** the pressure-limiting valve (59) is formed by a disc spring assembly (43; 61) which also holds the control slide (41) in the throughflow position.

8. Damper valve according to Claim 6, **characterized in that** the control slide (41) is held in the throughflow position independently of the pretensioning force which acts on the pressure-limiting valve.

9. Damper valve according to Claim 8, **characterized in that** the control slide (41) is mounted such that it can be displaced relative to the valve plate (64) of the pressure-limiting valve (59).

10. Damper valve according to Claim 9, **characterized in that**, in the throughflow position, the control slide (41) is supported axially on the valve plate (64) of the pressure-limiting valve (59).

11. Damper-valve device according to Claim 1, **characterized in that** a spring support (63) accommodates the spring (43) which holds the control slide (41) in the throughflow position.

12. Damper valve according to Claim 1, **characterized in that** the control slide (41) has a plastically deformable adjusting region (44).

13. Damper valve according to Claim 12, **characterized in that** the adjusting region (44) of the valve body (41) is formed by a reduction (41n) in the wall thickness.

14. Vibration damper having a damper-valve device according to Claim 4, **characterized in that** the throttle point (55) is defined by an inner wall (53) of a cylinder (3) of the vibration damper (1).

15. Vibration damper having a damper-valve device according to Claim 1, **characterized in that** the damper-valve device according to the invention is configured on a piston (7) of the vibration damper (1).

16. Vibration damper having a damper-valve device according to Claim 5, **characterized in that** the control slide (41) is supported on a piston nut (25) of the piston (7).

17. Vibration damper having a damper-valve device according to Claim 5, **characterized in that** the spring (43) which holds the control slide (41) in the throughflow position is configured independently of a valve spring (23) which pretensions the valve body (21) of the first damper-valve assembly (10) of the piston-side damper valve.

18. Damper-valve device for a vibration damper according to Claim 7, **characterized in that** the valve spring (23) for the first assembly (10) of the damper valve (12) fixes the assembly (41; 43; 63) which comprises the control slide (41) to the damper valve.

19. Vibration damper having a damper valve according to Claim 6, **characterized in that** the piston nut (25) clamps the spring support (63) and the control slide (41) to form a structural unit.

20. Vibration damper having a damper valve according to Claim 9, **characterized in that** a supporting ring (65), on which the control slide (41) is supported axially, is added to the structural unit (25; 63; 41).

21. Vibration damper having a damper valve according to Claim 20, **characterized in that** the supporting ring (65) is connected to the piston nut (25) in a torque-transmitting manner and is configured with turning-tool faces (65v).

22. Vibration damper having a damper-valve device according to Claim 14, **characterized in that** the damper-valve device is configured on the piston (7) and on the bottom valve (27).

23. Vibration damper having a damper-valve device according to Claim 22, **characterized in that** the control slide (41) on the bottom valve (27) assumes the closed position at a slower flow speed than the control slide (41) on the piston-side damper-valve device.

## Revendications

1. Assemblage d'un clapet amortisseur, comprenant un premier clapet amortisseur (15; 17; 19; 29; 33; 35; 37) avec une courbe caractéristique de force d'amortissement, selon laquelle un corps de clapet amortisseur (17), dans un premier domaine de fonctionnement en fonction de la vitesse d'écoulement au clapet amortisseur (15; 17; 19; 29; 33; 35; 37), passe à une position de fonctionnement de passage lorsque la vitesse d'écoulement d'un fluide d'amortissement augmente, avec un deuxième clapet amortisseur (41; 55) qui, dans un deuxième domaine de fonctionnement de la courbe caractéristique de la force d'amortissement, présente une caractéristique de force d'amortissement progressive et dont le point d'étranglement (55) peut être amené dans une position de fermeture en liaison avec un coulisseau de commande (41), **caractérisé en ce que** le coulisseau de commande (41) présente une face (57) exposée à la pression du fluide d'amortissement qui agit sur le coulisseau de commande (41) dans la direction de fermeture en fonction de la vitesse d'écoulement du fluide d'amortissement.

2. Assemblage de clapet amortisseur selon la revendication 1, **caractérisé en ce que** le coulisseau de commande (41) est disposé en série avec le clapet amortisseur (12; 20) par rapport au chemin d'écoulement du fluide d'amortissement.

3. Assemblage de clapet amortisseur selon la revendication 1, **caractérisé en ce que** le coulisseau de commande (41) est raccordé par sa face exposée à la pression (57) à un point d'étranglement (55), qui conduit au premier groupe de clapet amortisseur (15; 17; 19; 31; 39).

4. Assemblage de clapet amortisseur selon la revendication 3, **caractérisé en ce que** le point d'étranglement (55) est déterminé par le diamètre extérieur du coulisseau de commande (41).

5. Assemblage de clapet amortisseur selon la revendication 1, **caractérisé en ce que** le coulisseau de commande (41) est maintenu en position de passage par un ressort (43).

6. Assemblage de clapet amortisseur selon la revendication 1, **caractérisé en ce qu'**un clapet de limitation de pression (59) est monté en parallèle sur le point d'étranglement (45; 55).

7. Assemblage de clapet amortisseur selon la revendication 6, **caractérisé en ce que** le clapet de limitation de pression (59) est formé par un paquet de rondelles élastiques (43; 61), qui maintient également le coulisseau de commande (41) dans la position de passage.

8. Clapet amortisseur selon la revendication 6, **caractérisé en ce que** le coulisseau de commande (41) est maintenu dans la position de passage, indépendamment de la force de précontrainte qui agit sur le clapet de limitation de pression.

9. Clapet amortisseur selon la revendication 8, **caractérisé en ce que** le coulisseau de commande (41) est monté de façon déplaçable par rapport au disque de clapet (64) du clapet de limitation de pression (59).

10. Clapet amortisseur selon la revendication 9, **caractérisé en ce que** le coulisseau de commande (41) s'appuie axialement, en position de passage, sur le disque de clapet (64) du clapet de limitation de pression (59).

11. Assemblage de clapet amortisseur selon la revendication 1, **caractérisé en ce qu'**un support de ressort (63) reçoit le ressort (43) maintenant le coulisseau de commande (41) dans la position de passage.

12. Clapet amortisseur selon la revendication 1, **caractérisé en ce que** le coulisseau de commande (41) comporte une zone de réglage déformable plastiquement (44).

13. Clapet amortisseur selon la revendication 12, **caractérisé en ce que** la zone de réglage (44) du corps de clapet (41) est formée par une diminution de l'épaisseur de paroi (41n).

14. Amortisseur de vibrations avec un assemblage de clapet amortisseur selon la revendication 4, **caractérisé en ce que** le point d'étranglement (55) est déterminé par une paroi intérieure (53) d'un cylindre (3) de l'amortisseur de vibrations (1).

15. Amortisseur de vibrations avec un assemblage de clapet amortisseur selon la revendication 1, **caractérisé en ce que** l'assemblage de clapet amortisseur conforme à l'invention est réalisé sur un piston (7) de l'amortisseur de vibrations (1).

16. Amortisseur de vibrations avec un assemblage de clapet amortisseur selon la revendication 5, **caractérisé en ce que** le coulisseau de commande (41) s'appuie sur un écrou de piston (25) du piston (7).

17. Amortisseur de vibrations avec un assemblage de clapet amortisseur selon la revendication 5, **caractérisé en ce que** le ressort (43) maintenant le coulisseau de commande (41) en position de passage est réalisé indépendamment d'un ressort de clapet (23) exerçant une précontrainte sur le corps de clapet (21) du premier groupe de clapet amortisseur (10) du clapet amortisseur côté piston.

18. Assemblage de clapet amortisseur pour un amortisseur de vibrations selon la revendication 7, **caractérisé en ce que** le ressort de clapet (23) pour le premier groupe (10) du clapet amortisseur (12) fixe le groupe (41; 43; 63) comprenant le coulisseau de commande (41) sur le clapet amortisseur.

19. Amortisseur de vibrations avec un clapet amortisseur selon la revendication 6, **caractérisé en ce que** l'écrou de piston (25) serre le support de ressort (63) et le coulisseau de commande (41) en une unité structurelle.

20. Amortisseur de vibrations avec un clapet amortisseur selon la revendication 9, **caractérisé en ce que** l'unité structurelle (25; 63; 41) est complétée par une bague de support (65), sur laquelle le coulisseau de commande (41) s'appuie axialement.

21. Amortisseur de vibrations avec un clapet amortisseur selon la revendication 20, **caractérisé en ce que** la bague de support (65) est assemblée à l'écrou de piston (25) de façon à transmettre un couple de rotation et est réalisée avec des faces d'application d'un outil de rotation (65v).

22. Amortisseur de vibrations avec un assemblage de clapet amortisseur selon la revendication 14, **caractérisé en ce que** l'assemblage de clapet amortisseur est réalisé sur le piston (7) et sur le clapet de fond (27).

23. Amortisseur de vibrations avec un assemblage de clapet amortisseur selon la revendication 22, **caractérisé en ce que** le coulisseau de commande (41) dans le clapet de fond (27) occupe la position de fermeture pour une vitesse d'écoulement plus basse que le coulisseau de commande (41) sur l'assemblage de clapet amortisseur côté piston.
